# EUROPÄISCHE PATENTSCHRIFT

(11) **EP 1 468 184 B1**
(45) Veröffentlichungstag und Bekanntmachung des Hinweises auf die Patenterteilung: **13.01.2016**
(21) Anmeldenummer: 03702497.3
(22) Anmeldetag: 22.01.2003
(51) Int. Cl.: F02M 25/07, F28F 27/02

(54) **ABGASWÄRMEÜBERTRAGER**
EXHAUST GAS HEAT EXCHANGER
ECHANGEUR THERMIQUE DE GAZ D'ECHAPPEMENT

(30) Priorität: 26.01.2002 DE 10203003
(43) Veröffentlichungstag der Anmeldung: 20.10.2004
(73) Patentinhaber: MAHLE Behr GmbH & Co. KG, 70469 Stuttgart (DE)
(72) Erfinder: ROSIN, Jürgen, 73630 Remshalden (DE); BRONISCHEWSKI, Bernhard, 47829 Krefeld (DE); FASSBENDER, Ulrich, 41189 Mönchengladbach (DE); HEINZE, Manfred, 41751 Viersen (DE); KRIEN, Andreas, 50181 Bedburg (DE); WALLRAVEN, Markus, 41464 Neuss (DE)
(74) Vertreter: Grauel, Andreas
(86) Internationale Anmeldenummer: PCT/EP2003/000606
(87) Internationale Veröffentlichungsnummer: WO 2003/062625

(56) Entgegenhaltungen:
- EP-A- 0 987 427
- EP-A- 1 030 050
- WO-A-01/53768
- DE-A- 4 430 648
- DE-A- 10 025 877
- DE-A- 19 962 863
- DE-C- 914 450
- DE-U- 29 611 034
- US-A- 3 353 590
- US-A- 4 993 367
- US-A- 6 141 961
- PATENT ABSTRACTS OF JAPAN vol. 012, no. 315 (M-735), 26. August 1988 (1988-08-26) & JP 63 088212 A (AISIN SEIKI CO LTD), 19. April 1988 (1988-04-19)
- PATENT ABSTRACTS OF JAPAN vol. 011, no. 082 (M-571), 12. März 1987 (1987-03-12) & JP 61 237998 A (TOYO RADIATOR KK), 23. Oktober 1986 (1986-10-23)
- PATENT ABSTRACTS OF JAPAN vol. 011, no. 234 (M-611), 30. Juli 1987 (1987-07-30) & JP 62 046194 A (TOYO RADIATOR KK), 28. Februar 1987 (1987-02-28)

## Beschreibung

Die Erfindung bezieht sich auf einen Abgaswärmeübertrager nach dem Oberbegriff des Patentanspruches 1, wie er durch die DE-A 199 62 863 der Anmelderin bekannt wurde, sowie die US-6 141 961.

Bei diesem bekannten Abgaswärmeübertrager ist ein Bypasskanal mit dem Abgaswärmeübertrager in einem Gehäuse integriert. Der eigentliche Abgaswärmeübertrager besteht aus einem Rohrbündel von Abgasrohren mit rechteckförmigem Querschnitt, die in einem Wärmetauschergehäuse angeordnet sind, welches vom Kühlmittel des Kühlmittelkreislaufes einer Brennkraftmaschine durchströmt wird. Somit gelangt die Wärme der Abgase über das Kühlmittel in den Kühlmittelkreislauf der Brennkraftmaschine und damit auch in den Heizungskreislauf, in welchem ein von Kühlmittel durchströmter Heizkörper angeordnet ist. Durch die Aufheizung des Kühlmittelkreislaufes über die Abgaswärme kann auch eine schnellere Heizung des Fahrzeuginnenraumes erreicht werden. Dieser Abgaswärmeübertrager fungiert somit als Zusatzheizung in der Warmlaufphase. Für den Fall, daß die Aufheizung des Kühlmittelkreislaufes nicht erwünscht ist, wird der Abgasstrom bei dem bekannten Abgaswärmeübertrager durch einen Bypasskanal geleitet, der von den Abgasrohren und dem Kühlmittel thermisch isoliert ist. Der durch den Bypasskanal strömende Abgasstrom gibt somit praktisch keine Wärme an das Kühlmittel ab. Die Umleitung des Abgasstromes durch die Abgasrohre, die vom Kühlmittel umströmt werden, oder durch den isolierten Bypasskanal erfolgt über ein Abgasventil, welches entweder im Abgaseintritts- oder -austrittsbereich angeordnet ist und über einen Stellantrieb bestätigt wird. Bei dem bekannten Abgaswärmeübertrager ist das Abgasventil als elastisches, biegsames Umlerikorgan ausgebildet.

Abgaswärmeübertrager werden auch als sogenannte Abgaskühler in der Abgasrückführung für Kraftfahrzeuge, insbesondere solche mit Dieselmotoren, eingesetzt. Durch die EP-A 987 427 wurde ein solcher Abgaskühler, eingebaut in ein Abgasrückführ (AGR) -System, bekannt. Dieser Abgaskühler weist einen Wärmetauscher mit U-förmig ausgebildeten Abgasrohren auf, d. h. die Ein- und Austrittsquerschnitte für die Abgasrohre liegen am selben Ende des Abgaskühlers und sind durch eine Trennwand voneinander getrennt. Diesem ein- und austrittsseitigem Ende des Abgaskühlers ist eine Ventileinrichtung mit einem Absperrventil und einem Bypasskanal zugeordnet. Dadurch ist es möglich, den Abgasstrom entweder durch den Abgaskühler zu leiten und somit das Abgas über das Kühlmittel zu kühlen oder den Zustrom zum Abgaskühler zu sperren und den Abgasstrom durch den Bypasskanal zu leiten - in diesem Falle erfolgt keine Kühlung des Abgases. Der Bypasskanal ist Teil der Ventileinrichtung und nicht Teil des Abgaskühlers.

Es ist Aufgabe der vorliegenden Erfindung, einen Abgaswärmeübertrager der eingangs genannten Art dahingehend zu verbessern, daß eine einfache und betriebssichere Umschaltung des Abgasstromes einerseits durch den Wärmeüberträgerteil und andererseits durch den Bypasskanal möglich ist. Die Lösung dieser Aufgabe ergibt sich für den gattungsgemäßen Wärmeübertrager aus den kennzeichnenden Merkmalen des Patentanspruches 1. Danach weist das Abgasventil zur Steuerung des Abgasstromes ein starres Verschlußglied auf, welches an die thermischen, mechanischen und dynamischen Belastungen eines Abgaswärmeübertragers angepaßt ist.

Nach einer vorteilhaften Weiterbildung der Erfindung ist das Verschlußorgan als sogenannte Halbklappe ausgebildet, d. h. eine einseitig an ihrer Längsseite befestigte Klappe, wobei die Schwenkachse in der Mitte des Strömungsquerschnittes liegt und die Halbklappe jeweils den halben Querschnitt, d. h. entweder den Bypasskanalquerschnitt oder den Wärmeübertragerquerschnitt verschließt, respektive freigibt. Diese Halbklappe ist einfach von außen über eine Antriebswelle zu betätigen und legt sich umfangsseitig in Schließstellung an die Innenwand des Abgaskanals an. In vorteilhafter Weise nimmt die Halbklappe in ihrer Schließstellung eine zur Abgasströmungsrichtung schräg verlaufende Stellung ein, wobei sie durch den Abgasdruck gegen die innere Gehäusewand des Abgangskanals gedrückt wird. Dies ergibt eine stabile Schließstellung.

Nach einer vorteilhaften Weiterbildung der Erfindung ist zwischen Schwenkachse und Eintrittsquerschnitt des Abgaswärmeübertragers eine Trennwand vorgesehen - dadurch wird eine bessere Abdichtung des umgelenkten Abgasstromes erreicht.

Nach einer vorteilhaften Weiterbildung der Erfindung ist das Verschlußorgan als Schwenkklappe mit einer etwa mittig angeordneten Schwenkachse ausgebildet. Die Schwenkklappe gleitet mit ihrer stromabwärtigen Dichtkante auf einer konkav bzw. kreiszylindrisch ausgebildeten Dichtfläche, die vor den Eintrittsquerschnitten des Abgasrohrbündels und dem Bypasskanal mittels einer Trennwand befestigt ist. Infolge der mittigen Anordnung der Schwenkachse sind die Stellkräfte für das Verschwenken dieser Klappe niedriger; die Schwenkklappe ist um die Drehachse druckausgeglichen, d. h. der statische Druck bewirkt keine Drehung der Klappe. In einer vorteilhaften Weiterbildung dieser Ausführungsform ist der Abgasströmungskanal im Schwenkbereich derart erweitert, daß Umlenkzonen für das Abgas gebildet werden. Dadurch wird ein zu hoher Druckverlust vermieden. Vorteilhaft kann auch eine außermittige Anordnung der Schwenkachse sein: dadurch kann der stromabwärtige Schwenkbereich der Dichtkante und damit die Erstreckung der Dichtfläche verkleinert werden.

Gemäß einer vorteilhaften Weiterbildung der Erfindung ist das Verschlußorgan als Schwenkklappe mit etwa rechtwinklig zueinander angeordneten Schließflächen ausgebildet, wobei die Schwenkachse etwa im Schnittpunkt der Schließflächen angeordnet ist. Durch diese einfache Klappengeometrie ist es möglich, durch eine Schwenkbewegung von 90° entweder das Rohrbündel oder den Bypasskanal durch eine der beiden Schließflächen zu verschließen, während die andere Schließfläche in Strömungsrichtung des Abgases ausgerichtet ist und somit praktisch keinen Widerstand erzeugt. Durch den Druck des Abgasstromes auf die querliegende Schließfläche ist eine stabile Schließstellung gewährleistet. Durch diese Ausbildung als Winkelklappe ergibt sich eine kurze Baulänge.

Nach einer vorteilhaften Weiterbildung der Erfindung ist das Verschlußorgan als quer zur Abgasströmung beweglicher Plattenschieber ausgebildet, der etwa die halbe Querschnittsfläche gegenüber dem gesamten Strömungsquerschnitt aufweist. Dadurch kann durch eine einfache translatorische Bewegung, die vorzugsweise über eine Unterdruckdose eingeleitet wird, jeweils eine Hälfte des Querschnittes versperrt werden. In vorteilhafter Weise ist dieser Plattenschieber in seitlichen Führungsnuten gleitend aufgenommen. Dieser Plattenschieber kann sowohl im Abgaseintritts- als auch im Abgasaustrittsbereich angeordnet werden. Der Antrieb dieses Plattenschiebers ist insofern besonders einfach, als man auf Gestänge oder Kurbelelemente, wie bei einer Schwenkbewegung erforderlich, verzichten kann. Die Baulänge wird durch die Ausbildung als Plattenschieber extrem kurz.

Nach einer vorteilhaften Ausgestaltung der Erfindung kann jedes der vorgenannten Verschlußorgane über eine außerhalb des Ventilgehäuses angeordnete Unterdruckdose, die als Stellantrieb insbesondere bei Kraftfahrzeugen vielfach verwendet wird, angetrieben werden. Mittels eines einfachen Gestänges kann die translatorische Bewegung der Unterdruckdose in eine Schwenkbewegung umgesetzt werden.

Nach einer vorteilhaften Weiterbildung der Erfindung kann der vorgenannte Abgaswärmeübertrager besonders vorteilhaft in einem Abgasrückführungssystem (AGR-System) für Kraftfahrzeuge, insbesondere mit Dieselmotoren oder direkteinspritzenden Otto-Motoren, als Abgaskühler eingesetzt werden. Die Verwendung dieses Abgaswärmeübertragers mit integriertem Bypass ergibt sehr günstige Einbau- und Montagebedingungen, da der Abgaswärmeübertrager - auch aufgrund seines rechteckförmigen Querschnittes - relativ nahe und raumsparend am Motorblock angeordnet werden kann, wobei Herstellung und Montage eines zusätzlichen Bypassrohres entfällt.

Ausführungsbeispiele der Erfindung sind in der Zeichnung dargestellt und werden im Folgenden näher beschrieben. Es zeigen
- Fig. 1: ein Abgasrückführsystem mit Abgaskühler und integriertem By-pass,
- Fig.2: eine perspektivische Ansicht auf den Eintrittsquerschnitt des Abgaskühlers,
- Fig. 3: eine perspektivische Ansicht des Abgaskühlers mit Abgasventil und Halbklappe,
- Fig. 4, 4a: eine zweite Ausführungsform des Abgasventils mit Schwenkklappe,
- Fig. 5, 5a: eine dritte Ausführungsform des Abgasventils mit Winkelklappe und
- Fig. 6, 6a, 6b: eine vierte Ausführungsform des Abgasventils als Plattenschieber.

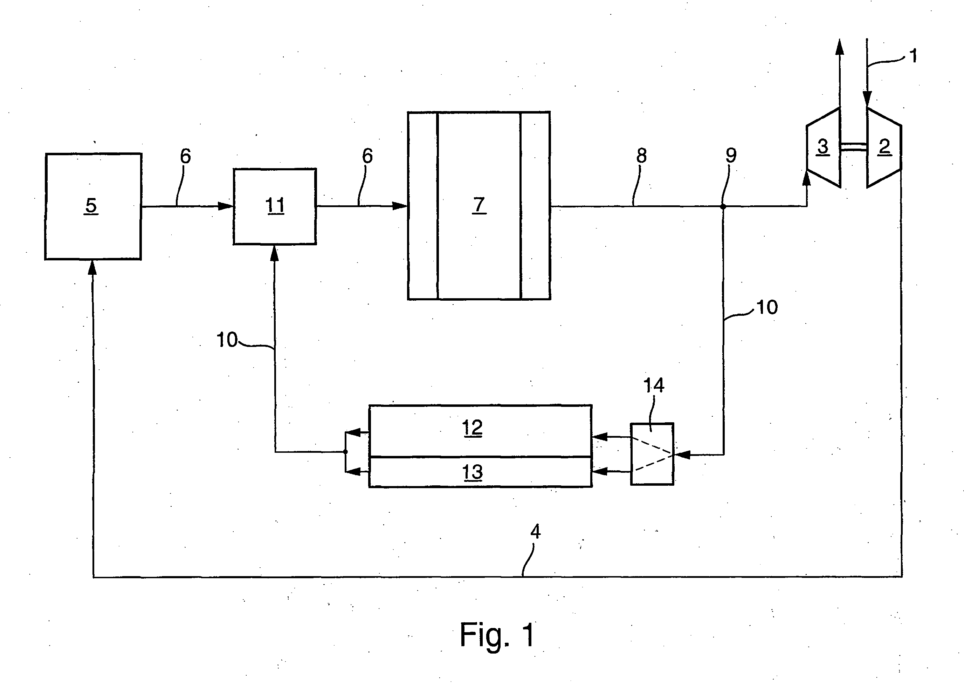

**Fig. 1** zeigt eine schematische Darstellung eines Abgasrückführungssystems (AGR-System) mit den einzelnen im Ansaugluft- bzw. Abgaskreislauf angeordneten Komponenten. Die Umgebungsluft, dargestellt durch einen Pfeil 1, wird über einen Turboverdichter 2 angesaugt, der seinerseits über eine Abgasturbine 3 angetrieben wird. Die verdichtete und erhitzte Ansaugluft gelangt über eine Leitung 4 in den Ladeluftkühler 5, wo sie abgekühlt wird, und von dort über eine Leitung 6 zum Ansaugtrakt eines Dieselmotors oder eines direkt einspritzenden Otto- Motors 7. Die im Motor verbrannte Luft tritt als Abgas über die Leitung 8 über den Abgastrakt aus dem Motor 7 in die Leitung 8 aus und gelangt von dort in die Abgasturbine 3 und von dieser aus ins Freie. Im Abgasstrang 8 wird an einer Verzweigungsstelle 9 Abgas abgezweigt und in einer Schleife 10 über ein Abgasrückführventil 11 wieder in den Ansaugluftkanal 6 eingespeist. Das AGR-Ventil 11 regelt dabei die Menge des zurückgeführten Abgases. In der Schleife 10 ist ein Abgaskühler 12 mit einem integrierten Bypass 13 angeordnet, welcher primärseitig vom Abgas durchströmt und sekundärseitig vom Kühlmittel, abgezweigt vom nicht dargestellten Kühlmittelkreislauf des Motors 7, gekühlt wird. In Abgasströmungsrichtung vor dem Abgaskühler 12 ist ein Abgasventil 14 angeordnet, welches als Weiche fungiert und den Abgasstrom entweder zwecks Kühlung durch den Abgaskühler 12 oder durch den Bypass 13 leitet, sofern keine Kühlung des Abgases erforderlich ist. Durch diese Abgasrückführung können Verbrauch und Emissionswerte des Motors 7 gesenkt werden - dieses Verfahren der Abgasrückführung ist bekannter Stand der Technik. In den folgenden Figuren werden Ausführungsbeispiele beschrieben, bei denen der Abgaskühler 12, der Bypass 13 und das Abgasventil 14 zu einer Baueinheit integriert sind.

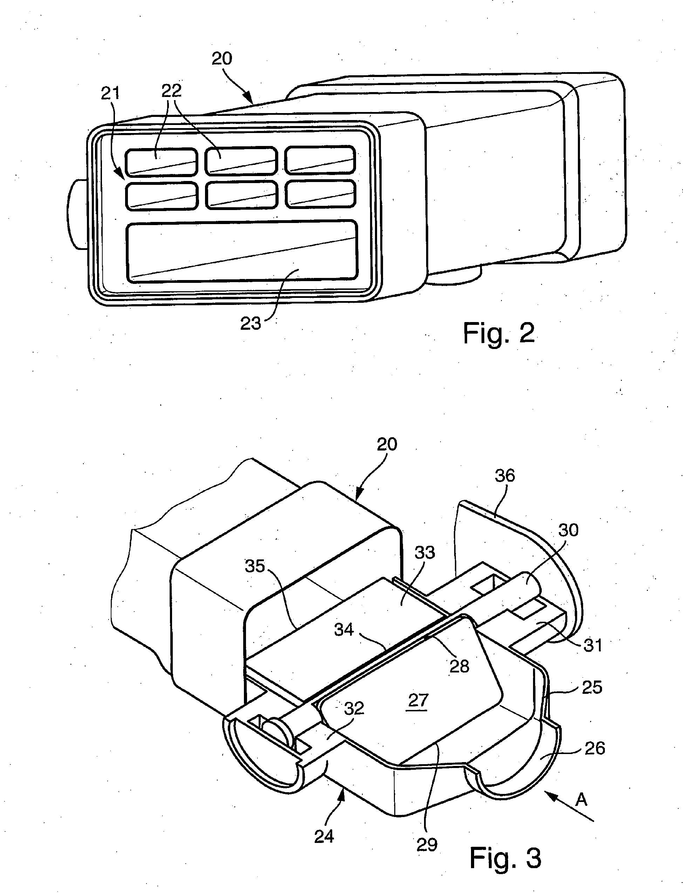

**Fig. 2** zeigt in perspektivischer Darstellung den Eintrittsquerschnitt eines Abgaskühlers 20, der einerseits ein Rohrbündel 21 mit sechs Abgasrohren 22 mit rechteckförmigem Querschnitt und andererseits einen Bypasskanal 23 aufweist, wobei die Strömungsquerschnitte des Rohrbündels 21 und des Bypasskanals 23 annähernd gleich sind. Die Abgasrohre 22 werden - wie an sich bekannt und hier nicht dargestellt - vom Kühlmittel des Kühlkreislaufes umströmt, d. h. das durch die Abgasrohre 22 strömende Abgas gibt seine Wärme an das Kühlmittel in den Kühlmittelkreislauf des Motors ab.

**Fig. 3** zeigt den in Fig. 2 beschriebenen Abgaskühler 20, ebenfalls in perspektivischer Darstellung, mit einem vorgeschalteten Abgasventil 24, welches ein Gehäuse 25 mit einem Eintrittsstutzen 26 aufweiset und mit dem Abgaskühler 20 verschweißt ist. Im Inneren des Gehäuses 25 befindet sich eine sogenannte Halbklappe 27, die einen etwa rechteckförmigen Querschnitt aufweist, und zwar mit einer Längskante 28 und einer äußeren Dichtkante 29. Die innere Längskante 28 ist an einer Antriebswelle 30 befestigt, die ihrerseits in zwei Lagern 31 und 32 außerhalb des Gehäuses 25 drehbar und axial fixiert gelagert und nach außen abgedichtet ist. Das Abgas tritt in Richtung des Pfeiles A durch den Eintrittsstutzen 26 in das Ventilgehäuse 24 ein. In Strömungsrichtung unterhalb der Antriebswelle 30 ist mittig eine Trennwand 33 angeordnet, die einen etwa rechteckförmigen Querschnitt aufweist und mit einer oberen Längskante 34 an die Antriebswelle 30 anschließt und mit einer unteren Längskante 35 zwischen den in Fig. 2 dargestellten Eintrittsquerschnitten des Rohrbündels 21 und des Bypasskanals 23 dichtend angeordnet ist. Die Antriebswelle 30 und damit die Halbklappe 27 wird durch ein Stellelement angetrieben, von dem hier nur ein Abtriebselement in Form einer Kurbelscheibe 36 dargestellt ist. In der in Fig. 3 dargestellten Position der Halbklappe 27 wird also der untere Querschnitt des Abgaskühlers, d. h. gemäß der Darsteilung in Fig. 2 der Bypasskanal 23 abgedeckt, so daß der gesamte Abgasstrom A durch den oberen Querschnitt des Abgaskühlers 20, d. h. durch das Rohrbündel 21, strömt. Damit wird das Abgas gekühlt. Wie aus der Darstellung in Fig. 3 ersichtlich, ist die Halbklappe 27 schräg zur Strömungsrichtung des Abgases angeordnet - dadurch wird erstens ein verminderter Druckverlust für die Abgasströmung und zweitens eine hinreichende Anpreßwirkung auf die Halbklappe zur Erhöhung der Dichtwirkung erreicht.

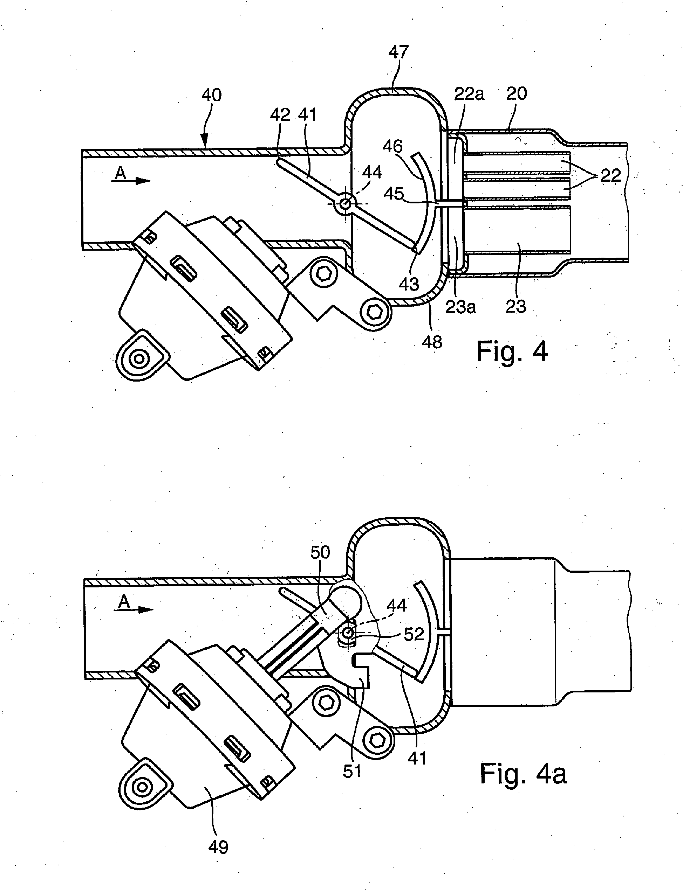

**Fig. 4** zeigt eine weitere Ausführungsform eines Abgasventils 40, welches eine Schwenkklappe 41 mit zwei Dichtkanten 42 und 43 und mittig angeordneter Schwenkachse 44 aufweist. Dieses Abgasventil 40 ist dem Abgaskühler 20 (gleiche Bezugsziffern wie in Fig. 2) mit den Abgasrohren 22 und dem Bypasskanal 23 vorgeschaltet und mit diesem zu einer Baueinheit verbunden. Zwischen dem Eintrittsquerschnitt 22a für die Abgasrohre 22 und dem Eintrittsquerschnitt 23a für den Bypasskanal ist eine Trennwand 45 angeordnet, die an ihrem stromaufwärtigen Ende eine konkave und kreiszylinderförmige Dichtfläche 46 aufweist. Diese Dichtfläche 46 arbeitet mit der Dichtkante 43 der Schwenkklappe 41 zusammen und erstreckt sich bezüglich der Länge des Kreisbogens über den Schwenkbereich der Klappe 41. Aufgrund dieser Ausbildung der Dichtfläche 46 ist das Gehäuse des Abgasventils 40 in diesem Bereich in seinem Querschnitt erweitert und weist Erweiterungsabschnitte 47 und 48 auf, damit der Abgasstrom einen hinreichenden Durchtrittsquerschnitt und damit keinen zu hohen Druckabfall erhält.

In Abwandlung der Darstellung gemäß Fig. 4 kann die Schwenkachse auch außermittig angeordnet sein, so daß die Klappenteilflächen beiderseits der Schwenkachse unterschiedlich groß sind - dadurch ergibt sich bei gleichem Schwenkwinkel eine umso kürzere konkave Dichtfläche je näher die Schwenkachse an die Dichtfläche rückt.

Fig. 4a zeigt den Antrieb der Schwenkklappe 41 mittels einer Unterdruckdose 49, die bezüglich ihres Aufbaues und ihrer Funktion an sich bekannt ist. Diese Unterdruckdöse 49 ist an der Außenseite des Abgasventils 40 befestigt und weist eine Kolbenstange 50 auf, die mit einer Mitnehmerscheibe 51 gelenkig gekoppelt ist. Die Mitnehmerscheibe 51 ist drehfest an einer Antriebswelle 52 befestigt, die die Schwenkklappe 41 verstellt. Somit wird durch die translatorische Bewegung der Kolbenstange 50 und die exzentrische Anlenkung über die Mitnehmerscheibe 51 eine Drehbewegung für die Schwenkklappe 41 erzielt, wobei ein Schwenkbereich von ca. 60° ausreichend ist, um entweder den oberen oder den unteren Querschnitt des Abgaskühlers freizugeben.

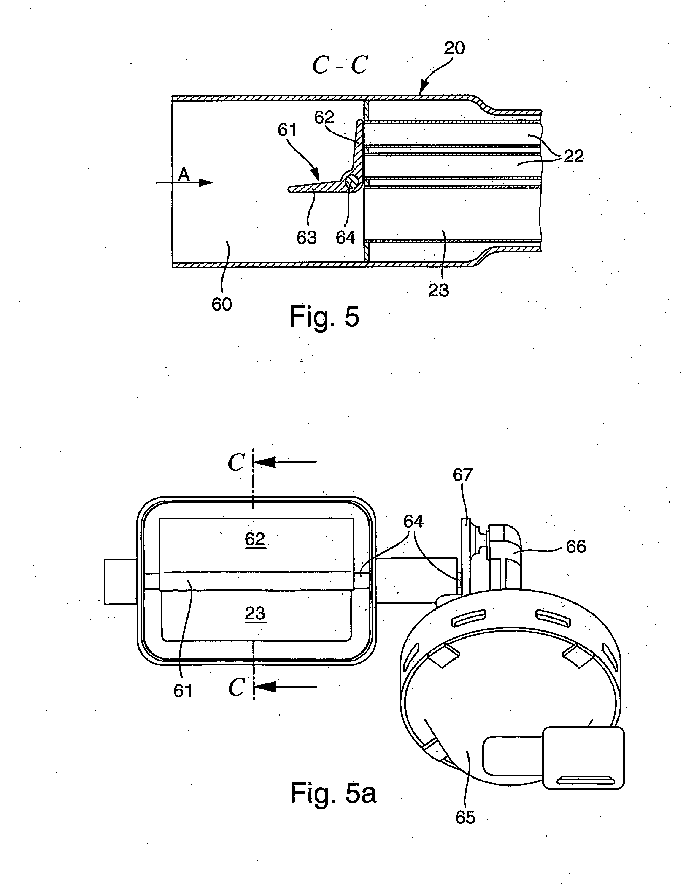

**Fig. 5** zeigt eine weitere Ausführungsform mit einem Abgasventil 60, welches dem Abgaskühler 20 (wiederum dieselben Bezugsziffern wie oben) vorgeschaltet ist. Unmittelbar vor dem Eintrittsquerschnitt der Abgasrohre 22 und dem Bypasskanal 23 befindet sich eine sogenannte Winkelklappe 61, die zwei etwa rechtwinklig zueinander angeordnete Schließflächen 62 und 63 aufweist, die bezüglich ihres Querschnittes so bemessen sind, daß sie jeweils den Eintrittsquerschnitt der Abgasrohre 22 oder des Bypasskanals 23 abdecken. Die Winkelklappe 61 ist um eine etwa im Schnittpunkt der beiden Schließflächen 62 und 63 angeordnete Schwenkachse 64 schwenkbar, d. h. etwa um 90°. In der dargestellten Schwenkposition der Klappe 61 verschließt also die Schließfläche 62 die Abgasrohre 22, so daß der Bypasskanal 23 geöffnet ist; die zweite Schließfläche 63 erstreckt sich in dieser Position in Richtung des Abgasstromes A, d. h. sie setzt dem Abgasstrom nur einen minimalen Widerstand entgegen, während die andere Schließfläche 62 vom Abgasstrom gegen den Eintrittsquerschnitt der Rohre 22 gedrückt wird. Damit ergibt sich eine stabile Schließposition.

**Fig. 5a** zeigt den Antrieb der Winkelklappe 61, wiederum über eine Unterdruckdose 65, die über ihre Kolbenstange 66 und eine gelenkig mit ihr verbundene Mitnehmerscheibe 67 die Antriebswelle 64 antreibt, d. h. ihr eine Schwenkbewegung von 90° erteilt.

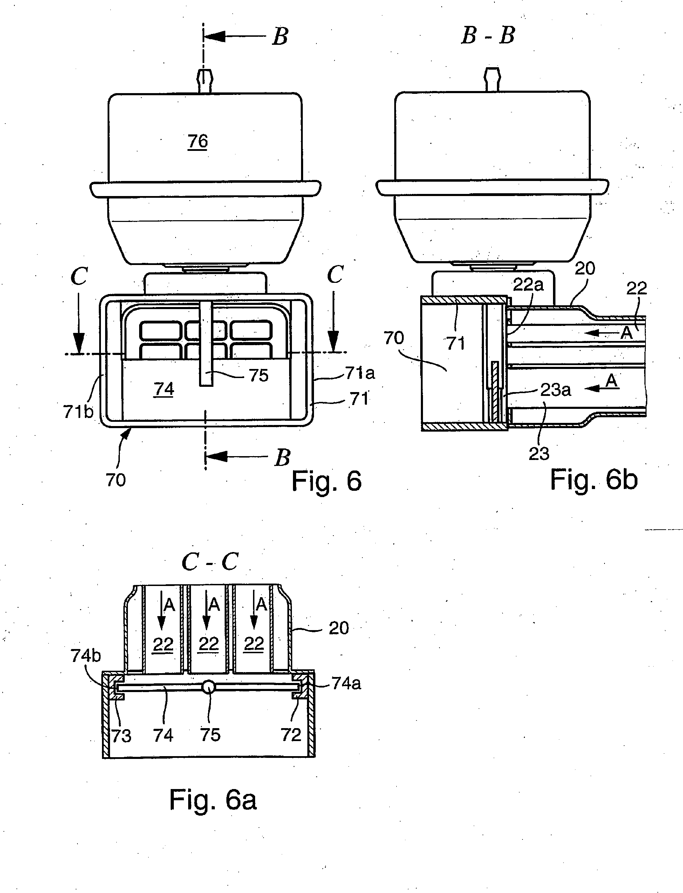

**Fig. 6** zeigt ein weiteres Ausführungsbeispiel für ein Abgasventil 70, welches diesmal dem Abgaskühler 20 (wiederum gleiche Bezugsziffern) nachgeschaltet ist - die Strömungsrichtung des Abgases ist durch die Pfeile A gekennzeichnet. Das Abgasventil 70 weist ein Gehäuse 71 mit etwa rechteckförmigem Querschnitt auf, angepaßt an den Querschnitt des Abgaskühlers 20. An den beiden Schmalseiten 71a, 71b des Gehäuses 71 sind Führungsnuten 72 und 73 am Gehäuse 71 befestigt; sie erstrecken sich über die gesamte Höhe des Strömungsquerschnittes und nehmen in sich die Längskanten 74a, 74b eines Plattenschiebers 74 auf, dessen Querschnittsfläche etwa der halben Querschnittsfläche des Ventilgehäuses 71 bzw. des Abgaskühlers 20 entspricht. Am Plattenschieber 74 ist eine Betätigungsstange 75 befestigt, die in nicht näher dargestellter Weise mit dem Kolben einer Unterdruckdose 76 verbunden ist. Da der nicht dargestellt Kolben der Unterdruckdose 76 eine translatorische Bewegung ausführt, sind in diesem Falle keine Getriebemittel zur Umsetzung in eine Drehbewegung erforderlich, vielmehr ist der Betätigungskolben der Unterdruckdose direkt mit der Betätigungsstange 75 des Schiebers 64 gekoppelt. Dies ergibt einen besonders einfachen Antrieb. Der Schieber 74 ist bei dem dargestellten Ausführungsbeispiel stromabwärts vom Abgaskühler 20 angeordnet - allerdings ist auch eine stromaufwärtige Anordnung ohne weiteres möglich.

## Patentansprüche

1. Abgaswärmeübertrager (20) mit einem Rohrbündel (21) aus Abgasrohren (22) und einem Bypasskanal (23) in einem gemeinsamen Gehäuse, wobei das Rohrbündel von flüssigem Kühlmittel umströmt wird, wobei das Rohrbündel und der Bypasskanal in einen gemeinsamen Abgaseintrittsbereich und einen gemeinsamen Abgasaustrittsbereich münden und wobei im Abgasein- oder - austrittsbereich ein durch einen Stellantrieb betätigtes Abgasventil mit einem Verschlussorgan angeordnet ist, welches den Abgasstrom durch das Rohrbündel oder den Bypasskanal lenkt, **dadurch gekennzeichnet, dass** das Verschlussorgan als biegesteife, schwenkbare Halbklappe (27) ausgebildet ist, die mit einer Längsseite (28) an einer quer zur Abgasströmung (A) angeordneten Antriebswelle (30) befestigt ist, und dass zwischen der Antriebswelle (30) und den Eintrittsquerschnitten des Rohrbündels (21) und des Bypasskanals (23) eine Trennwand (33) angeordnet ist.

2. Abgaswärmeübertrager nach Anspruch 1, **dadurch gekennzeichnet, dass** die Halbklappe (27) in einem Ventilgehäuse (25) mit annähernd rechteckförmigem Strömungsquerschnitt angeordnet ist und wechselweise die eine oder die andere Querschnittshälfte verschließt.

3. Abgaswärmeübertrager nach Anspruch 1 oder 2, **dadurch gekennzeichnet, dass** die Halbklappe (27) in Abgasströmungsrichtung (A) schließt und in Schließstellung schräg zum Abgasstrom (A) angeordnet ist.

4. Abgaswärmeübertrager (20) mit einem Rohrbündel (21) aus Abgasrohren (22) und einem Bypasskanal (23) in einem gemeinsamen Gehäuse, wobei das Rohrbündel von flüssigem Kühlmittel umströmt wird, wobei das Rohrbündel und der Bypasskanal in einen gemeinsamen Abgaseintrittsbereich und einen gemeinsamen Abgasaustrittsbereich münden und wobei im Abgasein- oder - austrittsbereich ein durch einen Stellantrieb betätigtes Abgasventil mit einem Verschlussorgan angeordnet ist, welches den Abgasstrom durch das Rohrbündel oder den Bypasskanal lenkt, **dadurch gekennzeichnet, dass** das Verschlussorgan als Schwenkklappe (41) mit etwa mittig angeordneter Schwenkachse (44) und zwei sich gegenüberliegenden Dichtkanten (42, 43) ausgebildet ist, dass zwischen Schwenkachse (44) und den Eintrittsquerschnitten des Rohrbündels (21) und des Bypasskanals (23) eine Trennwand (45) mit einer der Schwenkklappe (41) zugewandten konkaven Dichtfläche (46) angeordnet ist und dass die stromabwärtige Dichtkante (43) an der Dichtfläche (46) über den Schwenkbereich gleitet.

5. Abgaswärmeübertrager nach Anspruch 4, **dadurch gekennzeichnet, dass** die Schwenkklappe (41) in einem Gehäuse (40) angeordnet ist, dessen Strömungsquerschnitt sich stromabwärts der Schwenkachse (44) zu Strömungsumlenkbereichen (47, 48) erweitert.

6. Abgaswärmeübertrager (20) mit einem Rohrbündel (21) aus Abgasrohren (22) und einem Bypasskanal (23) in einem gemeinsamen Gehäuse, wobei das Rohrbündel von flüssigem Kühlmittel umströmt wird, wobei das Rohrbündel und der Bypasskanal in einen gemeinsamen Abgaseintrittsbereich und einen gemeinsamen Abgasaustrittsbereich münden und wobei im Abgasein- oder - austrittsbereich ein durch einen Stellantrieb betätigtes Abgasventil mit einem Verschlussorgan angeordnet ist, welches den Abgasstrom durch das Rohrbündel oder den Bypasskanal lenkt, **dadurch gekennzeichnet, dass** das Verschlussorgan als Winkelklappe (61) mit zwei etwa rechtwinklig zueinander angeordneten Schenkeln (62, 63) und einem gemeinsamen Scheitelpunkt ausgebildet und um eine durch den Scheitelpunkt verlaufende Achse (64) schwenkbar ist und dass ein Schenkel (62, 63) jeweils einen Eintrittsquerschnitt des Rohrbündels (21) oder des Bypasskanals (23) abdeckt, während der andere Schenkel parallel zur Abgasströmung (A) ausgerichtet ist.

7. Abgaswärmeübertrager (20) mit einem Rohrbündel (21) aus Abgasrohren (22) und einem Bypasskanal (23) in einem gemeinsamen Gehäuse, wobei das Rohrbündel von flüssigem Kühlmittel umströmt wird; wobei das Rohrbündel und der Bypasskanal in einen gemeinsamen Abgaseintrittsbereich und einen gemeinsamen Abgasaustrittsbereich münden und wobei im Abgasein- oder - austrittsbereich ein durch einen Stellantrieb betätigtes Abgasventil mit einem Verschlussorgan angeordnet ist, welches den Abgasstrom durch das Rohrbündel oder den Bypasskanal lenkt, **dadurch gekennzeichnet, dass** das Verschlussorgan als quer zur Abgasströmungsrichtung (A) beweglicher Plattenschieber (74) mit einer Querschnittsfläche ausgebildet ist, die etwa dem halben Strömungsquerschnitt entspricht.

8. Abgaswärmeübertrager nach Anspruch 7, **dadurch gekennzeichnet, dass** der Plattenschieber (74) unmittelbar vor den Eintrittsquerschnitten (22a, 23a) oder hinter den Austrittsquerschnitten des Abgaskühlers (20) angeordnet ist und zwei parallele Längskanten (74a, 74b) aufweist, die in gehäuseseitigen Führungsnuten (72, 73) gleitend angeordnet sind.

9. Abgaswärmeübertrager nach Anspruch 7 oder 8, **dadurch gekenntzeichnet**, dass am Plattenschieber (74) eine Betätigungsstange (75) befestigt ist, die mit dem Stellantrieb (76) verbunden ist.

10. Abgaswärmeübertrager nach einem der vorhergehenden Ansprüche, **dadurch gekennzeichnet, dass** die Stellantriebe als Unterdruckdosen (49, 65, 76) ausgebildet sind, deren Stellorgan (50, 66, 75) das Verschlussorgan (41; 61, 74) antreibt.

11. Verwendung des Abgäswärmeübertragers nach einem der vorhergehenden Ansprüche als Abgaskühler (12) mit integriertem Bypasskanal (13) in einem Abgasrückführ-System (6, 7, 8, 9, 10, 11) für Kraftfahrzeuge, insbesondere mit Dieselmotoren.

## Claims

1. An exhaust gas heat exchanger (20) having a tube bundle (21) composed of exhaust gas tubes (22) and a bypass passage (23) in a common housing, the tube bundle being surrounded by liquid coolant, the tube bundle and the bypass passage opening out into a common exhaust gas inlet region and a common exhaust gas outlet region, and wherein an exhaust gas valve having a closure member and being actuated by an actuating drive is arranged in the exhaust gas inlet or outlet region and guides the flow of exhaust gas through the tube bundle or the bypass passage, **characterised in that** the closure member is designed as a flexurally rigid, pivotable half-flap (27), one longitudinal side (28) of which is secured to a drive shaft (30) arranged transversely with respect to the exhaust gas flow (A), and **in that** a partition (33) is arranged between the drive shaft (30) and the inlet cross sections of the tube bundle (21) and the bypass passage (23).

2. The exhaust gas heat exchanger as claimed in claim 1, **characterised in that** the half-flap (27) is arranged in a valve housing (25) with an approximately rectangular cross section of flow and alternately closes off one half of the cross section or the other half of the cross section.

3. The exhaust gas heat exchanger as claimed in claim 1 or 2, **characterised in that** the half-flap (27) closes in the exhaust gas direction of flow (A) and in the closed position is arranged obliquely with respect to the exhaust gas stream (A).

4. The exhaust gas heat exchanger (20) having a tube bundle (21) composed of exhaust gas tubes (22) and a bypass passage (23) in a common housing, the tube bundle being surrounded by liquid coolant, the tube bundle and the bypass passage opening out into a common exhaust gas inlet region and a common exhaust gas outlet region, and wherein an exhaust gas valve having a closure member and being actuated by an actuating drive is arranged in the exhaust gas inlet or outlet region and guides the flow of exhaust gas through the tube bundle or the bypass passage, **characterised in that** the closure member is designed as a pivot flap (41) with an approximately centrally arranged pivot pin (44) and two opposite sealing edges (42, 43), **in that** a partition (45) with a concave sealing surface (46) facing the pivot flap (41) is arranged between the pivot pin (44) and the inlet cross sections of the tube bundle (21) and of the bypass passage (23), and **in that** the downstream sealing edge (43) slides along the sealing surface (46) over the pivoting range.

5. The exhaust gas heat exchanger as claimed in claim 4, **characterised in that** the pivot flap (41) is arranged in a housing (40), the cross section of flow of which widens downstream of the pivot pin (44), to form flow-diverting regions (47, 48).

6. The exhaust gas heat exchanger (20) having a tube bundle (21) composed of exhaust gas tubes (22) and a bypass passage (23) in a common housing, the tube bundle being surrounded by liquid coolant, the tube bundle and the bypass passage opening out into a common exhaust gas inlet region and a common exhaust gas outlet region, and wherein an exhaust gas valve having a closure member and being actuated by an actuating drive is arranged in the exhaust gas inlet or outlet region and guides the flow of exhaust gas through the tube bundle or the bypass passage, **characterised in that** the closure member is designed as an angle flap (61) with two limbs (62, 63) arranged approximately at right angles to one another and a common apex, and can be pivoted about a pin (64) which runs through the apex, and **in that** one limb (62, 63) in each case covers an inlet cross section of the tube bundle (21) or of the bypass passage (23) while the other limb is oriented parallel to the exhaust gas flow (A).

7. The exhaust gas heat exchanger (20) having a tube bundle (21) composed of exhaust gas tubes (22) and a bypass passage (23) in a common housing, the tube bundle being surrounded by liquid coolant, the tube bundle and the bypass passage opening out into a common exhaust gas inlet region and a common exhaust gas outlet region, and wherein an exhaust gas valve having a closure member and being actuated by an actuating drive is arranged in the exhaust gas inlet or outlet region and guides the flow of exhaust gas through the tube bundle or the bypass passage, **characterised in that** the closure member is designed as a plate slide (74) that can move transversely with respect to the exhaust gas direction of flow (A) and has a cross-sectional area which approximately corresponds to half the cross section of flow.

8. The exhaust gas heat exchanger as claimed in claim 7, **characterised in that** the plate slide (74) is arranged immediately upstream of the inlet cross sections (22a, 23a) or downstream of the outlet cross sections of the exhaust gas cooler (20) and has two parallel longitudinal edges (74a, 74b) which are arranged slideably in housing-side guide grooves (72, 73).

9. The exhaust gas heat exchanger as claimed in claim 7 or 8, **characterised in that** an actuating rod (75) which is connected to the actuating drive (76) is secured to the plate slide (74).

10. The exhaust gas heat exchanger as claimed in one of the preceding claims, **characterised in that** the actuating drives are designed as vacuum cells (49, 65, 76), the actuating member (50, 66, 75) of which drives the closure member (41; 61, 74).

11. The use of the exhaust gas heat exchanger as claimed in one of the preceding claims as an exhaust gas cooler (12) with integrated bypass passage (13) in an exhaust gas recirculation system (6, 7, 8, 9, 10, 11) for motor vehicles, in particular with diesel engines.

## Revendications

1. Echangeur de chaleur de gaz d'échappement (20) comprenant un faisceau de tubes (21) se composant de tubulures de gaz d'échappement (22), et comprenant un conduit de dérivation (23), placés dans un carter commun, où le faisceau de tubes est baigné par un moyen de refroidissement liquide, où le faisceau de tubes et le conduit de dérivation débouchent dans une zone d'entrée des gaz d'échappement commune et dans une zone de sortie des gaz d'échappement commune, et où une soupape de gaz d'échappement actionnée par un mécanisme de commande et comprenant un organe d'obturation est disposée dans la zone d'entrée ou de sortie des gaz d'échappement, laquelle soupape de gaz d'échappement dirige le flux de gaz d'échappement à travers le faisceau de tubes ou à travers le conduit de dérivation, **caractérisé en ce que** l'organe d'obturation est conçu comme un demi-volet (27) pouvant pivoter et résistant à la flexion, lequel demi-volet est fixé, par un grand côté (28), sur un arbre d'entraînement (30) disposé de façon transversale par rapport à la direction d'écoulement des gaz d'échappement (A), et **en ce qu'**une paroi de séparation (33) est disposée entre l'arbre d'entraînement (30) et les sections d'entrée du faisceau de tubes (21) et du conduit de dérivation (23).

2. Echangeur de chaleur de gaz d'échappement selon la revendication 1, **caractérisé en ce que** le demi-volet (27) est disposé dans une cage de soupape (25), en ayant une section d'écoulement presque rectangulaire, et obture alternativement l'une ou l'autre des moitiés de section.

3. Echangeur de chaleur de gaz d'échappement selon la revendication 1 ou 2, **caractérisé en ce que** le demi-volet (27) se ferme suivant la direction d'écoulement des gaz d'échappement (A) et, en position de fermeture, est disposé de façon oblique par rapport au flux de gaz d'échappement (A).

4. Echangeur de chaleur de gaz d'échappement (20) comprenant un faisceau de tubes (21) se composant de tubulures de gaz d'échappement (22), et comprenant un conduit de dérivation (23), placés dans un carter commun, où le faisceau de tubes est baigné par un moyen de refroidissement liquide, où le faisceau de tubes et le conduit de dérivation débouchent dans une zone d'entrée des gaz d'échappement commune et dans une zone de sortie des gaz d'échappement commune, et où une soupape de gaz d'échappement actionnée par un mécanisme de commande et comprenant un organe d'obturation est disposée dans la zone d'entrée ou de sortie des gaz d'échappement, laquelle soupape de gaz d'échappement dirige le flux de gaz d'échappement à travers le faisceau de tubes ou à travers le conduit de dérivation, **caractérisé en ce que** l'organe d'obturation est conçu comme un volet pivotant (41) ayant un axe de pivotement (44) disposé à peu près au milieu et deux arêtes d'étanchéité opposées (42, 43), **en ce qu'**une paroi de séparation (45) ayant une surface d'étanchéité concave (46) tournée vers le volet pivotant (41) est disposée entre l'axe de pivotement (44) et les sections d'entrée du faisceau de tubes (21) et du conduit de dérivation (23), et **en ce que** l'arête d'étanchéité (43), située en aval, glisse sur la zone de pivotement en appui sur la surface d'étanchéité (46).

5. Echangeur de chaleur de gaz d'échappement selon la revendication 4, **caractérisé en ce que** le volet pivotant (41) est disposé dans un carter (40) dont la section d'écoulement s'élargit vers des zones de retour de flux (47, 48), en aval de l'axe de pivotement (44).

6. Echangeur de chaleur de gaz d'échappement (20) comprenant un faisceau de tubes (21) se composant de tubulures de gaz d'échappement (22), et comprenant un conduit de dérivation (23), placés dans un carter commun, où le faisceau de tubes est baigné par un moyen de refroidissement liquide, où le faisceau de tubes et le conduit de dérivation débouchent dans une zone d'entrée des gaz d'échappement commune et dans une zone de sortie des gaz d'échappement commune, et où une soupape de gaz d'échappement actionnée par un mécanisme de commande et comprenant un organe d'obturation est disposée dans la zone d'entrée ou de sortie des gaz d'échappement, laquelle soupape de gaz d'échappement dirige le flux de gaz d'échappement à travers le faisceau de tubes ou à travers le conduit de dérivation, **caractérisé en ce que** l'organe d'obturation est conçu comme un volet coudé (61) comprenant deux branches (62, 63) disposées à peu près à angle droit l'une par rapport à l'autre et ayant un sommet commun, et peut pivoter autour d'un axe (64) passant par le sommet, et **en ce qu'**une branche (62, 63) recouvre à chaque fois une section d'entrée du faisceau de tubes (21) ou une section d'entrée du conduit de dérivation (23), tandis que l'autre branche est orientée parallèlement à la direction d'écoulement des gaz d'échappement (A).

7. Echangeur de chaleur de gaz d'échappement (20) comprenant un faisceau de tubes (21) se composant de tubulures de gaz d'échappement (22), et comprenant un conduit de dérivation (23), placés dans un carter commun, où le faisceau de tubes est baigné par un moyen de refroidissement liquide, où le faisceau de tubes et le conduit de dérivation débouchent dans une zone d'entrée des gaz d'échappement commune et dans une zone de sortie des gaz d'échappement commune, et où une soupape de gaz d'échappement actionnée par un mécanisme de commande et comprenant un organe d'obturation est disposée dans la zone d'entrée ou de sortie des gaz d'échappement, laquelle soupape de gaz d'échappement dirige le flux de gaz d'échappement à travers le faisceau de tubes ou à travers le conduit de dérivation, **caractérisé en ce que** l'organe d'obturation est conçu comme une vanne à guillotine (74) mobile de façon transversale par rapport à la direction d'écoulement des gaz d'échappement (A) et ayant une surface de section qui correspond à peu près à la demi-section d'écoulement.

8. Echangeur de chaleur de gaz d'échappement selon la revendication 7, **caractérisé en ce que** la vanne à guillotine (74) est disposée directement devant les sections d'entrée (22a, 23a) ou derrière les sections de sortie du refroidisseur de gaz d'échappement (20), et présente deux arêtes longitudinales parallèles (74a, 74b) qui sont disposées en coulissant dans des rainures de guidage (72, 73) situées côté cage.

9. Echangeur de chaleur de gaz d'échappement selon la revendication 7 ou 8, **caractérisé en ce qu'**une barre d'actionnement (75) est fixée sur la vanne à guillotine (74), barre d'actionnement qui est reliée au mécanisme de commande (76).

10. Echangeur de chaleur de gaz d'échappement selon l'une quelconque des revendications précédentes, **caractérisé en ce que** les mécanismes de commande sont conçus comme des capsules à dépression (49, 65, 76) dont l'actionneur (50, 66, 75) entraîne l'organe d'obturation (41 ; 61, 74).

11. Utilisation de l'échangeur de chaleur de gaz d'échappement selon l'une quelconque des revendications précédentes, en tant que refroidisseur de gaz d'échappement (12) comprenant un conduit de dérivation intégré (13) dans un système de recyclage des gaz d'échappement (6, 7, 8, 9, 10, 11) pour des véhicules automobiles, en particulier équipés de moteurs Diesel.
